Europäisches Patentamt

European Patent Office

Office européen des brevets

(11) Publication number: **0 186 128**
**A2**

(12) **EUROPEAN PATENT APPLICATION**

(21) Application number: **85116188.5**

(22) Date of filing: **18.12.85**

(51) Int. Cl.⁴: **C 03 C 13/00**
**C 03 C 25/06**

(30) Priority: **24.12.84 US 685680**

(43) Date of publication of application:
**02.07.86 Bulletin 86/27**

(84) Designated Contracting States:
**BE CH DE FR GB IT LI NL**

(71) Applicant: **PPG INDUSTRIES, INC.**
**One PPG Place**
**Pittsburgh Pennsylvania 15272(US)**

(72) Inventor: **Beaver, Richard Paul**
**1524 Annette Avenue**
**Library Pennsylvania 15129(US)**

(74) Representative: **Sternagel, Hans-Günther, Dr. et al,**
**Patentanwälte Dr. Michael Hann Dr. H.-G. Sternagel**
**Sander Aue 30**
**D-5060 Bergisch Gladbach 2(DE)**

(54) **Silica-rich, porous and nonporous fibers and method of producing same.**

(57) Porous and nonporous, alkaline tolerant, solid silica-rich fibers are produced from forming glass fibers of an aluminum borosilicate composition having extractable components and nonextractable components comprising silica and one or more metal oxides from a metal of Group IV of the Periodic Chart, and extracting the extractable components with or without heat treating the glass fibers. The nonporous silica-rich fibers are produced from the porous silica-rich fibers by reconsolidated through heat treatment to shrink the pores.

EP 0 186 128 A2

## SILICA-RICH, POROUS AND NONPOROUS FIBERS AND METHOD OF PRODUCING SAME

The present invention is directed to a method of producing distinct, porous or nonporous, silica-rich fibers, which in some cases have large enough diameters to be capillaries or tubes where the fibers have alkaline tolerance, and the so-produced porous silica-rich fibers.

Numerous methods exist in the art for producing pores in various forms of glass such as beads, fibers, capillaries and tubes. Glass fibers have been treated variously with heat treatments for phase separation of phase separable glass followed by leaching with acids and/or alkali material to produce pores in the glass fibers. For example, in U.S. Patents 2,215,039; 2,221,709 and 2,286,275 (Hood et al.) glass fibers made from the alkali metal borosilicate ternary glass system have been heat treated to phase separate the acid leachable materials from the silica and acid treated to remove the phase separated acid leachable materials. In addition, the acid leached glass fibers, which are silica-rich, can be alkali leached to extract some silica for greater porosity as shown in U.S. Patent 4,042,359.

Porous glasses have been investigated for various applications such as ultrafiltration, reverse osmosis, gaseous separations, gaseous liquid separations, liquid liquid separations, salt extraction, physiological or ion exchange membranes, catalyst supports and more thermally stable, silica-rich insulation and fabrics. In addition, nonporous silica-rich fibers provide excellent characteristics in high temperature applications. The chemical stability and high softening points of these fibers make them especially suitable for fabrication of

0186128

- 2-

rocket nozzles, re-entry vehicles, jet aircraft and for chemical process use as in filter bag scrubbers and the like.

Many of the foregoing applications require specific pore volumes and/or pore diameters for efficient operation. Also some of the applications require operability in alkaline environments. As mentioned in U.S. Patent 4,042,359, pore size can be enlarged by alkali leaching of the porous silica-rich fibers to partially dissolve the silicon dioxide structure. Unfortunately the silica-rich fibers are subject to alkaline attack so their use in alkaline environments is limited. The utilization of porous, silica-rich fibers would be limited to acid or neutral pH environments because of the alkaline solubility of the silica. Also silica-rich fibers can be difficult to produce because of their higher softening point of these materials.

It is an object of the present invention to provide both porous and nonporous, solid, silica-rich fibers with improved alkaline tolerance and the method of producing these fibers in a facile manner.

## SUMMARY OF THE INVENTION

The present invention accomplishes the aforementioned objects and other objects gleaned from the following disclosure by providing porous and nonporous, solid, silica-rich fibers containing zirconium oxide, titanium oxide and/or hafnium oxide.

In one aspect of the invention, the porous solid fibers are produced with controlled porosity by forming glass fibers having an aluminum borosilicate glass composition having oxides of a metal from Group IV of the Periodic Chart of the Elements. The components of the glass belong to either an extractable group or non-extractable group, although some components may be in various associations so as to belong to both groups. The components of the extractable group are extracted along with any associated materials. The components in the extractable group include in weight percent of the glass composition the following: boric oxide ($B_2O_3$) or anhydride about 5 to about 60; and alkaline earth bivalent oxides, calcium oxide (CaO), magnesium oxide (MgO) about 0 to about 30; and some minor amounts of $R_2O$, where R indicates sodium or potassium trivalent oxides, and some trace materials. In addition, the extractable group can have components that are associated materials such as reaction products with or between aforementioned components of the extractable group like alkali metal borates and such products involving aluminum oxide. The components of the non-extractable group in weight percent of the glass composition include: silica ($SiO_2$) in an amount greater than about 25 to less than about 80, and one or more oxides like tetravalent oxides selected from zirconia oxide and titania oxide and hafnium oxide present in an amount up to about 20 weight percent of the glass composition. The components of the extractable group are removed from the glass with or without heat treatment depending upon whether the glass composition is phase separable and the degree of porosity desired. The product is the porous, silica-rich, zirconium-containing, titanium-containing and/or hafnium-containing fibers.

It is an additional aspect of the present invention to produce nonporous, silica-rich fibers with alkaline tolerance. The porous, silica-rich fibers containing the oxide of the metal from the IV Group of the Periodic Chart is consolidated by heat treatment. The temperature of heat treatment is less than the melting temperature of the glass and greater than around 700°C.

It is a further additional aspect of the present invention to have porous and nonporous silica-rich fibers having improved alkali resistance, which are produced from the aluminum borosilicate, Group IV metal oxide-containing fiberizable glass forming composition. The porous and nonporous silica-rich fibers with improved alkaline stability can have controlled porosity by balancing the ratio of the components in the extractable and non-extractable groups. The porous silica-rich fibers have a filament diameter from around 1 micron upwards of 250 microns or more and a pore volume in the range of about 0.2 to about 1.2 cc per grams. The nonporous silica-rich fibers are comprised of silica and the

- 4-

oxide of the Group IV metal in a minor amount and are essentially free of other metal oxides.

## DETAILED DESCRIPTION OF THE INVENTION

For a better understanding of the invention the term "extractable" for a group of components refers to metal oxides and associated materials which are leachable from the glass fibers with or without heat treatment by water and/or acids other than hydrofluoric and phosphoric acids. These latter acids cannot be used since they attack silica. Also the term "non-extractable" for the group of components refers to silica and metal oxides of Group IV of the Periodic Chart. These materials are not leachable from the glass by acids other than hydrofluoric and phosphoric acids. Also the terms "associated material" refers to an interconnected phase of reaction products of the components of the extractable group or the non-extractable group or of the components from both groups because of their proximity to each other in the glass fibers. Nonexclusive examples of associated materials include alkali metal borates, alkali metal aluminates, other reaction products with aluminum oxide and the like.

It is believed but the present invention is not limited by this belief that the presence of aluminum oxide in the glass fibers before extraction provides glass fibers with good tensile strength in processing. In addition, the presence of one or more metal oxides of Group IV of the Periodic Chart such as the tetravalent oxides are as a substitute for the aluminum oxide in the glass rather than as a substitute for silica. Also it is believed that the extraction of the extractable components from the glass fibers can be accomplished with acid leaching without the need for heat treatment regardless of the filament diameter of the glass fibers, when the percent of components in the extractable group is greater than around 20 weight percent.

The solid porous and nonporous silica-rich fibers of the present invention are prepared from a formulated fiberizable, pore generating glass forming batch composition. The batch composition is formulated to enable the resulting glass fibers to have a balance of the components of the extractable and nonextractable group. Typical batch materials known to those skilled in the art can be used and calculated by known methods to produce the glass compositions with the components of the two groups. In the pore generating glass fiber composition, the components and affiliated materials of the extractable group include: one or more boron-containing materials, alkali metal oxides ($R_2O$); alkaline earth metal oxides like bivalent oxides (CaO, MgO); and their associated materials like that of trivalent oxides like $Al_2O_3$. In addition, trace amounts of materials usually present in trace amounts in glass fibers can also be present like fluorine and ferric oxide. The amount of the components of the extractable group in the glass fiber composition should be at least around 10 volume percent, and preferably at least around 15 volume percent of the total glass composition. The presence of the $R_2O$ or $B_2O_3$ materials also serve as fluxes in producing the glass fibers. The components of the non-extractable group include the siliceous material such as silica and refractory glass modifiers like the tetravalent oxides of zirconium and/or titanium and/or hafnium.

In the extractable group, the concentration of boron-containing material, boron oxides and/or anhydride and affiliated materials having boron, in the glass can range from about 5 to about 60 weight percent. The amount of boron-containing material should not be too great that the softening point of the glass fibers is decreased to cause the fibers to stick together during any heat treatment. This tackiness complicates the maintenance of individual fiber identity and, for discrete lengthy fibers, maintenance of any near parallel alignment during subsequent processing steps. Phase separable glass compositions that can be heat treated to engender phase separation before leaching are those having high concentrations of boron-containing materials, i.e., 20 to around 60, preferably 40 to around 60, weight percent of the total glass composition. With fibers having the higher amounts of boron-containing materials, care should be taken to avoid moisture attack before heat treatment of the fibers. When the amount of boron-containing components is in the range of about 4 to about 35 weight percent of the total resulting glass composition, one or more inorganic oxide components and/or one or more alkali metal oxide $(R_2O)$ and/or one or more alkaline earth metal oxides (RO) components can be present in the extractable group in addition to the aluminum oxide participation in the associated materials. When the amount of boron-containing material is around 40 weight percent and up to 60 weight percent of the total resulting glass composition, the boron-containing material components constitute the majority and the $R_2O$ and RO components and aluminum oxide components of the associated material constitute the minority of the extractable group.

Regarding the other components in the glass fiber that can be considered in the extractable group, the aluminum oxide is present in an amount in the range of about 0.1 to about 15 weight percent of glass composition. This amount is generally less for higher amounts of boron-containing materials in the glass fibers and larger for lower amounts of boron-containing materials in the glass fibers. The amount of the $R_2O$ components range from less than one weight percent up to around 15 weight percent, where lower amounts or higher amounts within the range are used with higher or lower amounts, respectively, of boron-containing components. Also there can be present, especially with lower amounts of boron-containing components, one or more alkaline earth, divalent components such as calcium oxide (CaO) and magnesium oxide (MgO). The total amount of these components can be in the range of 0 to about 30 weight percent of the glass composition.

The amount of siliceous material should not be less than around 25 and preferably not less than 30 weight percent of the total glass composition. Generally, the siliceous material is less than around 80, preferably less than around 70 weight percent of the total glass composition. The metal oxides like tetravalent metal oxides such as zirconium and/or titanium and/or hafnium can be present in amounts from 1 to about 20 weight percent of the glass composition. Preferably zirconium oxide is present in an amount of at least up to about 8 weight percent. Since these metal oxides have good acid insolubility, they are present with silica in the porous fiber. These metal oxides not only render porous fibers with good alkaline stability, but also enable substitution of the tetravalent oxides of zirconium and/or titanium and/or hafnium for one or more of the components of the extractable group. This not only results in controlling porosity by decreasing porosity without altering the amount of silica, but also results in more alkaline stable, porous silica-rich fibers.

The pore volume of the silica-rich fibers is controlled by balancing the glass batch formulation to yield glass fibers that when leached to remove the components of the extractable group result in a desired pore volume. The desired mean pore diameter is controlled by providing or not providing heat treatment and, if provided, heat treating at higher temperatures to increase the mean pore diameter. The number of pores is expressed as pore volume and surface area, and for discrete lengthy fibers, the volume should not be too large to destroy the fiberous shape over a discrete length. Such a length can range from that of chopped fibers up to any length that can be collected in the production of continuous glass fibers. As the discrete length of the glass fibers gets longer than chopped fibers, the pore volume should not extend beyond about 1.2 cc/gm and preferably 1.0 cc/gm. This maintains the discrete length of glass fiber and does not engender breakage of the discrete lengths into smaller lengths.

A particularly useful glass composition for increased porosity is a heat treatable glass for phase separation having a low silica and high-borate content. Generally, in these glasses there are present: silica at 30 to 50 percent by weight, boric oxide at 40 to 55 percent by

- 8-

weight, alkali metal oxide at 5 to 15 percent by weight, aluminum oxide from 0.1 to 4 weight percent and zirconium oxide about 1 to about 4 weight percent.

Glass fiber compositions which do not require heat treatment for phase separation to generate pores of lower mean pore diameter on leaching are also useful. Such fiberizable glass compositions usually have boron-containing components of less than around 40 and preferably 30 weight percent. A suitable aluminum borosilicate glass composition with zirconium oxide that does not require heat treatment and phase separation for extraction is one having in weight percent of the glass composition: 27 $B_2O_3$; 8.0 $Na_2O$; 60 $SiO_2$; 3.6 $ZrO_2$ and 1.4 $Al_2O_3$. Glass fibers with this glass composition can result in porous silica-rich, zirconia-containing fibers having a low or high degree of pore volume. The higher amount of boric oxide makes the glass phase separable upon heat treatment to obtain a high degree of porosity. Although this glass composition does not require heat treatment for extraction of the extractable components, pores can be generated in glass fibers of any filament diameter of this composition with heat treatment, where the porosity is of a higher degree. The filament diameters can range from around 1 micron and greater than 25 microns up to 250 microns and more. Although for winding the filaments, it is preferred to have a diameter of not more than around 150 microns.

Another suitable aluminum borosilicate – Group IV metal-containing glass fiber composition for generating a lower degree of porosity is the "E-glass" or "621-glass" composition with zirconium oxide and/or titanium oxide and/or hafnium oxide. These modified glass fiber compositions have in weight percent: 46-56 silica, 5-13 boric oxide, 10-17 aluminum oxide, 13-24 calcium oxide, 0 to 6 magnesium oxide, 2-6 zirconium oxide, 0 to 6 titanium oxide and/or hafnium oxide along with less than around 1 percent of both fluorine and ferric oxide and $R_2O$. The 621 glass differs from E-glass in the presence of magnesium oxide in the former. The E-glass in the absence of magnesium oxide has an increased amount of calcium oxide. Preferably, the modified 621-glass is modified with zirconium oxide that is substituted for some aluminum oxide. The preferred glass fiber composition in weight percent is: 52-56 silica, 5 to 8 boric oxide, greater than 22 to 24 calcium oxide, less than 12 aluminum oxide, 2-5 zirconium oxide with less than 1 weight percent of each of the following: fluorine, ferric oxide and sodium oxide. The extractable components can be removed from these glass fiber compositions through acid leaching without any heat treatment.

The glass batch compositions are melted in a furnace at temperatures and times to obtain a fiberizable viscosity for the molten glass without devitrification. Generally, the batch is heated to 2000°F (1093°C) to 3000°F (1649°C) for 1 to about 6 hours or longer. The molten glass is attenuated from the orifices of a bushing or spinnerets located on a forehearth connected to the furnace. The attenuation is conducted by mechanical means (winding or chopping) or thermal means by using heated fluid flow. Any other method of forming and attenuating the fibers as known by those skilled in the art can also be used. The fibers may be cooled, treated with a chemical protecting agent, i.e., a sizing composition, and gathered into one or more strands and chopped or collected as continuous fibers or strands by any method known to those skilled in the art. U.S. Patents 4,071,339 and 4,049,411, are typical of such methods.

The glass fibers can have, and usually do have, a sizing composition applied to the glass fibers which protects the glass fibers from interfilament abrasion in further processing steps. The sizing composition can be applied in art known quantities by any method known to those skilled in the art. The sizing composition is usually an aqueous composition with water soluble, dispersible or emulsifiable chemical agents that is placed on the glass fibers and remains on the glass fibers after the water and/or solvent is evaporated, but that may also be easily removable through solubility in a solvent like water. An example of a suitable water soluble chemical treatment is a cationic lubricant in water, which is applied to the glass fibers. A suitable cationic lubricant includes Cation X® material, which is an alkyl imidazoline reaction product of tetraethylene pentamine and stearic acid. Other suitable material include textile softeners and cationic lubricants or agents generally known to those skilled in the art such as those disclosed in U.S. Patent 4,002,445 (Graham).

After the sizing composition is applied to the glass fibers, the fibers are gathered into one or more strands, usually by means of a gathering shoe and then the glass fibers are wound onto a rotating drum-type winder having a forming tube to produce a forming package. The collet on which the forming package rides usually rotates at high speeds to collect the strand or strands into the forming package. Such speeds can be upward of 4,400 revolutions per minute which continues until the winder is slowed to a stop and a forming package is removed. An example of the forming process including sizing, gathering and collecting the glass fibers into a forming package is disclosed in U.S. Patent 4,071,339 (Griffiths) and U.S. Patent 4,049,411 (Long and Dent) where attenuation speeds of from about 2,000 to 20,000 feet per second are achieved.

The glass fibers and/or strands that are collected into the forms of multilayered package, either forming packages or roving packages, or into the forms of chopped fibers or strands, chopped or continuous fiberous or strand mats or batts are treated for pore generation. The fibers or strands may be removed from the packages by cutting or rewinding onto larger diameter drums or can remain in the packages, mat, batt or chopped strand form for the generation of pores. Preferably the strands are cut from one or more multilayered packages by making one or more cuts through the layers in a lengthwise manner extending parallel to the lengthwise axis of the package. The length of the cut glass fibers can be varied by varying the diameter of the forming package during winding of the glass fibers or by rewinding the glass fibers from the forming package onto a smaller or larger diameter package. The many layers of glass fibers which are removed from the package can be laid flat on a supporting surface. The supporting surface can be a plate or tray or moving conveyor belt. Generally, the discrete lengths of glass fibers obtained by this approach can range from about 1 inch to around 25 inches (2.54 cm to 63.5 cm). Any other method for removing the glass fibers from the multilayered package can be employed. For example, the fibers can be unwound from the package and disposed as chopped strand or continuous strand onto another supporting surface or holder or rotating drum. Preferably, the discrete lengths of glass fibers can range from about 0.25 inch (.64 cm) to around 70 inches (180 cm) and most preferably only up to around 25 inches (64 cm).

Before the pores are generated in the glass fibers as fibers or strands through extraction, any sizing composition present can be removed through a solvent wash such as a water wash to remove a water soluble sizing composition. It is preferred not to remove the sizing composition from the glass fibers, since the sizing composition appears to play a protecting role in any heat treating and/or acid leaching steps used in extracting the extractable components in generating pores.

The extraction to generate pores can be generated in the glass fibers by several routes, depending upon the the glass fiber composition. The pores that are generated should have a diameter across some portion of the opening of the pore, whether the pore is circular, elliptical, cylindrical or asymmetrical in shape, to yield the desired mean pore diameter. The mean pore diameter of the pores generated can have a broad or narrow distribution.

For glass fibers that are heat treatable for phase separation, the fibers are heat treated in a furnace or on a heated drum on which they were wound. The heat treatment is usually at a temperature greater than the annealing temperature and less than the softening point temperature of the glass. The temperature of heat treatment can assist in controlling the porosity of the glass fibers as taught for glass in U.S. Patent 3,758,284. The fibers can be water leached before they are acid leached, where the heat treatment, water leaching and acid leaching are conducted in accordance with the teachings of U.S. Patent 3,843,341. Some glass fibers with higher amounts of boron-containing material can have pores of sufficient dimensions generated by heat treatment for phase separation followed by water leaching alone. Other glass fibers having around 20 to less than 30 or 35 weight percent boron oxide or anhydride can have heat treatment for phase separation followed by water and/or acid leached or merely acid leached as described in U.S. Patents 4,042,359; 2,106,744 and 3,485,687.

Generally, the phase separable, glass fibers are heat treated at a temperature in the range of about 420°C to about 600°C for a period of time from about 10 minutes to several days. Longer times require lower temperatures, while shorter times require higher temperatures in these ranges. Most preferably, the fibers are heat treated at 540°C for 6 hours to phase separate the glass into the water and/or acid leachable components and the acid insoluble siliceous components. For the glass fibers with higher amounts of boron-containing materials, lower heat treating temperatures are useful to decrease any sticking together of the glass fibers, while the presence of a protective size allows utilization of higher heat treating temperatures. Afterwards, the fibers are cooled to ambient temperatures.

Regardless of the amount of the boron-containing components and phase separability of the glass fibers, when the solid glass fibers of an aluminum borosilicate composition fiber having the Group IV metal oxide have a diameter of less than around 15 to about 20 microns, pores can be generated in the fibers by acid leaching without heat treatment in the manner shown for fibers with diameters of less than 0.001 inch (25.4 microns) in U.S. Patent 2,461,841. Hence, glass fibers of modified "E-glass" and modified "621 glass" as solid fibers or strands can be made porous through acid leaching without the necessity of heat treating prior to acid leaching. Also regardless of the filament diameter, the glass fibers having the aforedescribed glass compositions with at least 25 weight percent extractable components can be acid leached without heat treatment to generate pores. An example is the aforedescribed glass fiber composition having in weight percent 27 $B_2O_3$; 8.0 $Na_2O$; 60 $SiO_2$; 3.6 $ZrO_2$ and 1.4 $Al_2O_3$.

The porous, solid, silica-rich fibers of the invention, have around at least 75 weight percent silica with a minor amount of the Group IV metal oxide which is preferably a substantial portion, except for trace amounts of other metal oxides of the remainder of the silica-rich fiber composition. The fibers have a mean pore diameter controlled to be in the range of about 10 to about 3,000 angstroms from any of the aforementioned extraction operations. The lengths vary from the particulate to continuous fibers, and the discrete lengths of fibers have a pore volume controlled in the range of about 0.2 to about 1.2 cc/gm, and fiber diameters are from preferably about 3 microns to about 150 microns. To these porous silica-rich fibers, biochemically active material can be applied, where the material becomes associated with the fibers either by absorption directly onto the glass surface or by entrapment through precipitation or by covalent bonding through a linking agent, or by crosslinking with a crosslinking agent.

The porous, solid, silica-rich, fibers with the Group IV metal oxide can be fashioned into nonporous, solid, silica-rich fibers with Group IV metal oxides. The porous fibers are condensed by heat treatment. The fibers are passed through a furnace or oven at a temperature from about 700°C but less than the melting point of the silica-rich fibers. Preferably, the heat treatment is less than about 1100°C. The heat treatment dehydrates and shrinks the fibers to solid nonporous silica-rich fibers with Group IV metal oxides.

The porous and nonporous silica-rich fibers with the Group IV metal oxides have improved alkaline tolerance. Although they are not completely immune or impervious to alkaline degradation, especially at high pH values, they do have improved alkaline tolerance over silica fibers.

- 14-

## PREFERRED EMBODIMENT OF THE INVENTION

The glass forming, fiberizable, pore generating batch composition is formulated by back calculations to result in glass fiber compositions that need not be heat treatable for phase separation into the components of the extractable and nonextractable groups. Preferably the glass fibers have zirconium oxide and/or titanium oxide substituted for some of the aluminum oxide in an aluminum alkali metal borosilicate fiber glass composition to result in porous fibers with good alkaline tolerance.

The glass fiber forming batch most preferably provides fibers with a glass composition having about 27 weight percent $B_2O_3$, 8 weight percent $Na_2O$, 1.4 weight percent aluminum oxide and about 60 weight percent $SiO_2$ and 3.6 weight percent zirconium oxide. This glass composition is formed by melting the batch at about 2600°F (1427°C) for 3 hours and is formed into glass fibers after conditioning in the bushing melter at 2600°F (1427°C) for around one hour by mechanical attenuation from a bushing. The fibers formed have a diameter in the range of about 3 microns to about 120 microns and most preferably about 10 microns to about 80 microns. The glass fibers are sized with an aqueous chemical treating composition preferably having a film forming polymer like epoxy resin, which is water soluble, dispersible or emulsifiable, and water soluble lubricant like Cation-X® lubricant and a compatible organosilane coupling agent like an epoxy silane. The fibers are gathered into one or more strands and wound into a cylindrical forming package.

A plurality of undried forming packages are cut along their longitudinal axes so that all of the layers of glass fibers can be removed from the package. These fibers are laid straight on trays in a nearly parallel alignment, where the fibers usually have a discrete length of about 25 inches (63.5 cm).

The glass fibers are acid leached with agitation, in a dilute acid solution, such as 0.1 to about 3 Normal, preferably, about 2 to 3

0186128

- 15-

Normal hydrochloric acid, at temperatures around 80°C to 100°C, preferably 90°C, for about 10 minutes to about 8 hours, preferably about 2 to about 4 hours. In the acid leach, the glass fibers are immersed in the acid bath for a sufficient period of time, at a sufficient temperature to remove a substantial amount, if not all, of the acid soluble boron-containing compounds in the glass fibers. The glass fibers typically may be submerged in the acid when the acid is cool and the temperature of the acid is increased to the elevated temperature. Nonexclusive examples of other suitable dilute solutions of acids include sulphuric and nitric acid, or organic acids such as oxalic acid. The volume ratio of acid to glass fibers in the acid leaching step can be about 1 to about 8 volumes of acid of one volume of glass fibers which will vary somewhat with the normality of the acid. The glass fibers are removed from the acid leaching solution, water washed to a pH of around 5.5 to neutral in the wash water after which the fibers are dried, preferably in air drying at around 90°C for around 10 minutes to about 24 hours.

If the aqueous sizing composition has not been removed prior to acid leaching as it preferably is not, the porous, silica-rich fibers are subjected to air oxidation. This removes any carbonaceous residue in the pores that may result from the sizing composition being present on the glass fibers during acid leaching for extraction of the extractable components. The temperature of oxidation is that sufficient to oxidize carbon in the presence of an adequate amount of oxygen preferably provided by flowing dry reconstituted air. It is most preferred that the oxidation be conducted at around 1000°F (537°C) or higher for about 20 minutes up to about 2 hours. The oxidation temperature should not be of such magnitude that the glass revitrifies and closes most of the pores or significantly reduces the strength of the porous fibers.

The invention along with alternative embodiments are illustrated further in the following examples.

- 16-

EXAMPLES

Table I

| SAMPLES | $B_2O_3$ | $Na_2O$ | WEIGHT % | | | |
|---|---|---|---|---|---|---|
| | | | $SiO_2$ | $ZrO_2$ | $Al_2O_3$ | CaO |
| 1 | 27.0 | 8.0 | 60.0 | 3.6 | 1.4 | -- |
| 2 | 7.2 | 1 | 54.0 | 3.6 | 10.7 | -- |
| 3 | 54.0 | 8.0 | 35.0 | 3 | -- | -- |
| Illus. Ex. | 7.2 | 1.0 | 54.0 | -- | 14.3 | 22.4 |

The glass compositions of Samples 1-3 listed in Table 1 can be useful in producing porous, solid, silica-rich fibers. The glass fibers formed with the glass compositions of the Illustrative Example produce porous silica fibers that are not alkaline tolerant. Glass fibers of Samples 2 and 3 and the Illustrative Example can produce porous silica-rich fibers in a manner similar to that for Sample 1 as explained in Example 1.

Example 1

The Sample 1 glass fiber composition of Table 1 was produced by melting glass forming, fiberizable batch calculated to yield the desired quantities of oxides melted at a temperature of 2600°F (1427°C) for 3 hours in platinum crucibles. The melt was cooled and crushed into approximately 0.5 inch (1.27 cm) pieces and charged into a 10 tip fiber bushing. The fibers were drawn on an 8" collet (20.32 cm) rotating at 135 RPM after a 1 hour conditioning in the bushing melter at 2600°F (1427°C) to reduce the seed content of the glass. The fibers were cut from the package in 25" (63.5 cm) lengths. Without heat treatment, the fibers were leached in 3N HCl for 1 hour at 95°C. The fibers were soaked in the hydrochloric acid bath for 4 hours with agitation to accomplish

acid leaching. The HCl was drained and the fibers were water washed with distilled water until a pH of 5.6 was achieved. The fibers were dried in flowing air at 95°C for 4 hours. The total weight loss was 36% yielding a porous silica-rich fiber composition of 95% $SiO_2$, 5% $ZrO_2$. The pore size averaged from around 8 to about 20 Å with a surface area of $400^{+}m^2/gm$.

Table II compares glass fibers having a standard E-glass composition versus glass fibers having zirconium-containing glass fiber composition in producing porous silica-rich fibers. The porous silica-rich fibers were then subjected to alkali leaching to compare the alkaline durability or tolerance of the two porous, silica-rich fibers which is shown in Table III.

## Table II

| | E-Glass | Zr-containing Glass |
|---|---|---|
| $B_2O_3$ | 7.2 | 7.2 |
| $SiO_2$ | 54.0 | 54.0 |
| CaO | 22.4 | 22.4 |
| $Al_2O_3$ | 14.3 | 10.7 |
| $ZrO_2$ | 0 | 3.6 |
| $F_2$ | 0.7 | 0.7 |

Two specimens of solid glass fibers had a fiber diameter of 10 microns where one had a standard "E-glass" composition and the other had a composition similar to Sample 2 of Table I. Six samples of each glass fiber composition of Table II were subjected to 2 hours at 95°C in 3 Normal HCl and the percent weight loss was recorded for the six samples. Additional data on percent weight loss was gathered from the 6 samples after 6 hours and 95°C in the 3 Normal HCl. The percent weight loss data for the 6 samples are presented in Table III.

## Table III

### PERCENT WEIGHT LOSS AFTER TWO HOURS AT 95°C HCL

| Samples | E-Glass | Zr-containing Glass |
|---|---|---|
| 1 | 35.6 | 31.5 |
| 2 | 38.0 | 29.5 |
| 3 | 39.4 | 31.0 |
| 4 | 34.3 | 32.1 |
| 5 | 32.8 | 31.4 |
| 6 | 34.5 | 31.4 |

PERCENT WEIGHT LOSS AFTER 6 HOURS AT 95°C HCl

| | E-Glass | Zr-containing Glass |
|---|---|---|
| 1 | 38.0 | 30.5 |
| 2 | 37.2 | 34.2 |
| 3 | 38.2 | 34.8 |
| 4 | 36.6 | 33.7 |
| 5 | 39.1 | 35.3 |
| 6 | 39.7 | 35.3 |

Table IV shows the 6 samples of porous, silica-rich fibers produced from the acid leaching samples that are depicted in Table III after being subjected to 24 hours at a 0.2 Normal sodium hydroxide solution. The percent weight loss for the alkali leaching is shown for the porous, silica-rich fibers resulting from the glass fibers having the E-glass composition compared to porous, silica-rich fibers resulting from the glass fibers having the zirconia-containing glass composition.

Table IV

PERCENT WEIGHT LOSS AFTER 24 HOURS IN 0.2 NORMAL SODIUM HYDROXIDE

| Sample | E-Glass | Zr-Containing Glass |
|---|---|---|
| 1 | 65.7 | 42.1 |
| 2 | 60.5 | 48.4 |
| 3 | 62.0 | 46.2 |
| 4 | 65.1 | 44.1 |

5                        67.7                      53.2

The results of Table IV show the improved alkaline tolerance of the zirconium-containing, porous, silica-rich fibers over silica-rich fibers produced from E-glass.

⋮

I CLAIM:

1. Process for producing an alkaline tolerant, porous solid, silica-rich fiber with controlled porosity, with aluminum borosilicate glass fibers, characterized by:

    a. forming glass fibers of a glass composition of aluminum borosilicate having one or more oxides of a metal from Group IV of the Periodic Chart, wherein in weight percent the glass composition has:

        boron-containing material from around 5 to around 60,
        aluminum oxide from around 0.1 to about 18,
        at least one oxide of a metal from Group IV of the Periodic Table about 1 to about 20
        alkali metal oxide from 0 to about 15,
        alkaline earth metal oxides from 0 to about 30, and
        silica from at least about 25 to about 80;

    b. extracting the extractable components including associated aluminum oxide from the fibers to produce porous silica-rich fibers containing at least one oxide of Group IV metals.

2. Process of Claim 1, wherein extracting involves acid leaching the glass fibers in a acid solution, where the acid is other than hydrofluoric acid or phosphoric acid, and where the percentage of extractable components in the glass fibers is greater than around 20 weight percent.

3. Process of Claim 1, wherein extracting includes heat treating the glass fibers to phase separate the extractable components from the nonextractable components and leaching the phase separated extractable components by water and/or acid leaching.

4. Process of Claim 1, wherein the glass fibers have a composition of 27 weight percent boric oxide, 8 weight percent sodium oxide, 60 weight percent silica, 3.6 weight percent zirconium oxide, and 1.4 weight percent aluminum oxide.

5. Process of Claim 1, wherein the glass composition has 7.2 weight percent boric oxide, 54 weight percent silica, 22.4 weight percent calcium oxide, 10.7 weight percent aluminum oxide, 3.6 weight percent zirconium oxide and 0.7 weight percent fluorine.

6. Process of Claims 1-5, wherein the glass fibers have a filament diameter of greater than 25 microns to less than 250 microns.

7. Process of Claims 1, 2-3, wherein the glass fibers have an amount of boron-containing material greater than 40 weight percent and are heat treated at lower temperatures.

8. Process of Claims 1-17, wherein forming includes attenuating the fibers from orifices in a bushing, contacting the fibers with an aqueous chemical treating composition, gathering the fibers into one or more strands and winding the strands into a cylindrical multilayered package.

9. Process of Claims 1-8, wherein the porous glass fibers have a pore volume in the range of about 0.2 to about 1.2 cc/gm.

10. Process of Claims 1-9, wherein the porous, silica-rich fibers have a length from less than 1/8 of an inch (0.3 cm) to continuous lengths.

11. Process of Claim 1, wherein the amount of silica in the glass fibers before extraction ranges from 30 to 70 weight percent.

12. Process of Claims 6, 8-10, wherein:

a. glass fibers are formed to have a glass composition of aluminum borosilicate, having a tetravalent oxide of a metal from Group IV of the Periodical chart, comprising:

  a) boron-containing material from around 5 to around 60,

  b) aluminum oxide from around 0.1 to about 15,

  c) tetravalent oxide of a metal from Group IV of the Periodic Table about 1 to about 20,

  d) alkali metal oxide from 0 to about 15,

  e) alkaline earth metal oxides from about 0 to about 30, and

  f) silica from at least about 25 to around 80,

b. the glass fibers are leached to remove water and/or acid extractable components including associated aluminum oxide from the fibers to produce porous silica-rich fibers with an oxide of a metal from Group IV of the Periodic Chart to provide alkaline tolerant fibers with controlled porosity.

13. Process of Claims 1, 6, 8-10, wherein:

a. glass fibers are formed to have a glass composition of aluminum borosilicate, having a tetravalent oxide of a metal from Group IV of the Periodic Chart having in weight percent, comprising:

  a) boron-containing material from around 8 to 13

  b) aluminum oxide from around 12 to 16,

  c) tetravalent oxide of a metal from Group IV of a metal from Group IV of the Periodic Table from about 1 to about 20,

  d) alkaline earth metal oxides from 16 to 25, and

  e) silica from 52 to 56,

b. the glass fibers are leached with acid to extract the acid extractable components including associated aluminum oxide from the fibers to produce porous, silica-rich fibers containing a metal from Group IV of the Periodic Table.

14. Process of Claims 1-13, which includes heating the porous, silica-rich fibers to reconsolidate the fibers to produce solid, nonporous silica-rich fibers having oxides at least one metal of Group IV of the Periodic Table.

15. Product produced from the processes of Claims 1-14.

16. Silica-rich fibers with alkaline tolerance having silica in an amount from around 75 weight percent to 99 weight percent with the balance being zirconium oxide, wherein the fibers are formed by reconsolidating porous, silica-rich fibers by heating wherein the porous silica-rich fibers are produced by acid leaching glass fibers having a composition of 27 weight percent boric oxide, 8 weight percent sodium oxide, 60 weight percent silica, 3.6 weight percent zirconium oxide and 1.4 weight percent aluminum oxide.